# EUROPÄISCHE PATENTSCHRIFT

(11) **EP 2 203 710 B1**
(45) Veröffentlichungstag und Bekanntmachung des Hinweises auf die Patenterteilung: **24.04.2013**
(21) Anmeldenummer: 08841643.3
(22) Anmeldetag: 17.10.2008
(51) Int. Cl.: G01B 7/14, F01D 21/04

(54) **STRÖMUNGSMASCHINE, SPALTMESSSYSTEM UND VERFAHREN ZUM ERMITTELN EINES ROTORSPALTES**
TURBOMACHINE, GAP-MEASURING SYSTEM, AND METHOD FOR DETERMINING A ROTOR GAP
MACHINE D'ÉCOULEMENT, SYSTÈME DE MESURE D'INTERSTICE ET PROCÉDÉ DE DÉTERMINATION DE L'INTERSTICE D'UN ROTOR

(30) Priorität: 25.10.2007 DE 102007051027
(43) Veröffentlichungstag der Anmeldung: 07.07.2010
(73) Patentinhaber: MTU Aero Engines GmbH, 80995 München (DE)
(72) Erfinder: ZIELINSKI, Michael, 85716 Unterschleissheim (DE)
(86) Internationale Anmeldenummer: PCT/DE2008/001700
(87) Internationale Veröffentlichungsnummer: WO 2009/052790

(56) Entgegenhaltungen:
- DE-A1- 3 617 373
- GB-A- 2 071 852
- US-A- 4 950 084
- US-A- 5 892 365

## Beschreibung

Die Erfindung betrifft eine Strömungsmaschine mit einem Rotorschaufeln umfassenden Rotor, mit einem den Rotor bzw. die Rotorschaufeln unter Ausbildung eines Rotorspalts zumindest abschnittsweise umgebenden Rotorgehäuse sowie mit einem Spaltmesssystem der im Oberbegriff des Patentanspruchs 1 angegebenen Art. Eine solche Strömungsmaschine ist beispielsweise aus den Druckschriften DE 3617 373 A, US 4,950,084 A, US 5,892,365 A und GB 2 071 852 A bekannt. Die Erfindung betrifft weiterhin ein Verfahren zum Ermitteln eines Rotorspaltes der im Oberbegriff des Patentanspruchs 13 angegebenen Art.

Eine derartige Strömungsmaschine ist dabei bereits aus dem Stand der Technik als bekannt zu entnehmen und umfasst wenigstens einen mit Rotorschaufeln versehenen Rotor und ein den Rotor bzw. die Rotorschaufeln unter Ausbildung eines Rotorspalts zumindest abschnittsweise umgebendes Rotorgehäuse. Der Wirkungsgrad und das Pumpverhalten der Strömungsmaschine werden durch den Rotorspalt zwischen den Spitzen der Rotorschaufeln und der dem Rotor bzw. den Rotorschaufeln zugewandten Wand des Rotorgehäuses mitbestimmt. Hier kommt es zu Druckverlusten, welche den Wirkungsgrad und den Pumpgrenzabstand verkleinern. Der Rotorspalt wird zudem drehzahlabhängig von der Fliehkraft und von thermischen Effekten beeinflusst. Während sich der Durchmesser des Rotors bzw. der Rotorschaufeln unmittelbar mit der Fliehkraft ändert, reagieren der Rotor und das Rotorgehäuse mit unterschiedlichen Zeitkonstanten auf Temperaturänderungen des die Strömungsmaschine durchströmenden Mediums. Dies führt zu komplexen Änderungen des Rotorspalts in Abhängigkeit der Drehzahl des Rotors, der Temperatur und der Zeit. Bei als Turbinen von Luftfahrzeugen ausgebildeten Strömungsmaschinen entstehen die kleinsten Rotorspalte beispielsweise bei sogenannten "Hot Reslams", bei welchen ein zuvor heruntergefahrener Rotor nach kurzer Zeit schnell wieder auf maximale Drehzahl gebracht wird. Der noch heiße Rotor erreicht dabei thermisch und fliehkraftbedingt seinen maximalen Durchmesser, wohingegen sich das Rotorgehäuse durch seine kleinere Wärmekapazität bereits in einem abgekühlten und damit geschrumpften Zustand befindet. Weitere Faktoren mit Einfluss auf den Rotorspalt sind beispielsweise Verformungen des Rotorgehäuses und Radialbewegungen des Rotors aufgrund von auf die Strömungsmaschine einwirkenden Beschleunigungskräften. Insgesamt muss daher bei der Konstruktion derartiger Strömungsmaschinen im Bereich der Spitzen der Rotorschaufeln ein ausreichend großer Rotorspalt vorgehalten werden, wodurch die Strömungsmaschine die meiste Zeit nicht mit optimalem Wirkungsgrad und Pumpengrenzabstand arbeiten kann. Bei der Erprobung von Strömungsmaschinen stellt der Rotorspalt daher eine zentrale Messgröße dar, so dass Strömungsmaschinen während der Erprobung zusätzlich ein Spaltmesssystem zum Ermitteln dieses Rotorspaltes umfassen. Das Spaltmesssystem ist dabei mit einer kapazitiven Sensoreinrichtung gekoppelt, welche als Kondensator eine Elektrode und eine Gegenelektrode zum Ermitteln von den Rotorspalt charakterisierenden Kapazitätsmesswerten aufweist. Dabei ist der Rotor bzw. seine Rotorschaufeln als Elektrode der Sensoreinrichtung geschaltet. Die Gegenelektrode des Kondensators ist üblicherweise als Sensor ausgebildet und innerhalb des Rotorgehäuses angeordnet. Die Kapazitätsmesswerte der Sensoreinrichtung verändern sich somit beim Vorbeilaufen der Rotorschaufeln während des Betriebs, wobei die Änderung der Kapazitätsmesswerte mit dem Rotorspalt korrespondiert. Für die Messung der Kapazitätsmesswerte stehen dem Fachmann verschiedene elektronische Bauelemente und Verfahren zur Verfügung, die mit Konstant- oder Wechselspannung arbeiten und das Spaltmesssystem bilden. Das Spaltmesssystem empfängt somit ein Wechselsignal mit der Frequenz der Schaufelwechselfrequenz, bei welchem der Amplitudenhub jeder Periode mit dem minimalen Rotorspalt der momentan unter dem Sensor durchlaufenden Schaufel korrespondiert. Der Zusammenhang zwischen dem Amplitudenhub und dem Rotorspalt wird im Vorfeld durch eine Kalibrierungsmessung bestimmt und kann beispielsweise in einem Kennfeld abgelegt werden.

Ein alternatives, aus dem Stand der Technik bekanntes Spaltmesssystem bzw. Verfahren arbeitet mit Sensoreinrichtungen, die in den vorbeilaufenden Rotorschaufeln Wirbelströme erzeugen, welche ihrerseits auf die Sensoreinrichtungen rückwirken. Die Größe des Effekts ist wiederum von der Größe des Rotorspalts abhängig.

Ein weiteres aus dem Stand der Technik bekanntes Spaltmesssystem bzw. Verfahren arbeitet mit Mikrowellen. Hier bildet die Sensoreinrichtung im Rotorgehäuse einen Resonator, dessen Eigenschaften sich ebenfalls beim Vorbeilaufen der Rotorblätter ändern und einen Messeffekt erzeugen.

Für alle Spaltmesssysteme bzw. Verfahren stellt der Einsatz in Serienströmungsmaschinen eine weit höhere Herausforderung dar als während der Erprobung der Strömungsmaschinen. Es werden Lebensdauern von 10000 Stunden und mehr gefordert, in welchen die Sensoreinrichtung verlässliche Rotorspaltmesswerte liefern muss. Zumindest die Sensoreinrichtung ist dabei in Abhängigkeit der konkreten Ausgestaltung der Strömungsmaschine variierenden Temperaturen bis 700°C, hohen Drücken, Schwingungen und weiteren Belastungen durch Wasser, Salz, Öl, Schmutz, metallischem Abrieb und dergleichen ausgesetzt.

Als nachteilig an den bekannten Strömungsmaschinen bzw. Spaltmesssystemen ist dabei der Umstand anzusehen, dass die Gegenelektrode der Sensoreinrichtung mit einem gewissen Rückstand zur den Rotorschaufeln zugewandten Wand des Rotorgehäuses angeordnet werden muss, damit sie im Fall eines Einlaufens der Rotorschaufeln nicht beschädigt wird. Diese Rückstände sind jedoch unerwünscht, da sie zu einer Störung der Strömung führen. Alternativ sind aus der Literatur Sensoreinrichtungen auf Wirbelstrombasis bekannt, die so ausgelegt sind, dass sie durch das Rotorgehäuse hindurch gegen die Rotorschaufeln messen (sog. "Throug-the-case" Sensoren). Das Rotorgehäuse muss hierfür im Bereich der Sensor-einrichtung dünner ausgeführt werden. Diese Methode führt allerdings zu einer erheblichen Verschlechterung der Messsignale.

Aufgabe der vorliegenden Erfindung ist es daher, eine Strömungsmaschine und ein Verfahren zum Ermitteln des Rotorspaltes einer derartigen Strömungsmaschine zu schaffen, welche bei hoher Messgenauigkeit eine hohe Lebensdauer sowie eine verringerte Störung der Strömung durch das Rotorgehäuse gewährleistet.

Die Aufgabe wird erfindungsgemäß durch eine Strömungsmaschine mit den Merkmalen des Patentanspruchs 1 sowie durch ein Verfahren zum Ermitteln eines Rotorspaltes mit den Merkmalen des Patentanspruchs 13 gelöst. Vorteilhafte Ausgestaltungen sind in den jeweiligen abhangigen Ansprüchen angegeben, wobei vorteilhafte Ausgestaltungen der Strömungsmaschine als vorteilhafte Ausgestaltungen des Verfahrens und umgekehrt anzusehen sind.

Eine Strömungsmaschine, welche eine hohe Lebensdauer aufweist und die Ermittlung des Rotationsspaltes mit hoher Messgenauigkeit bei verringerter Störung der Strömung durch das Rotorgehäuse gewährleistet, ist erfindungsgemäß dadurch geschaffen, dass zumindest ein Teil des Rotorgehäuses als Gegenelektrode der Sensoreinrichtung des Spaltmesssystems geschaltet ist. Die Sensoreinrichtung des Spaltmesssystems benötigt dadurch vorteilhafterweise keinen zusätzlichen, als Gegenelektrode dienenden Sensor innerhalb des Rotorgehäuses. Vielmehr wird die Funktion der Gegenelektrode durch das Rotorgehäuse selbst übernommen, so dass die ermittelbaren Kapazitätsmesswerte durch das Rotorgehäuse und durch die Flächen aller Spitzen der innerhalb des Rotorgehäuses bewegten Rotorschaufeln bestimmt werden. Auf diese Weise ist im Gegensatz zum Stand der Technik keine Beeinträchtigung der dem Rotor bzw. den Rotorschaufeln zugewandten Wand des Rotorgehäuses durch Vertiefungen und dergleichen gegeben, wodurch ein störungsfreies Durchströmen der Strömungsmaschine mit dem jeweiligen Medium erzielt wird. Weiterhin sind Probleme üblicher Sensoreinrichtungen aufgrund der extremen Betriebsbedingungen bei variierenden Temperaturen, hohen Drücken, Schwingungen und Verschmutzungen zuverlässig ausgeschlossen, da das Rotorgehäuse diesen Betriebsbedingungen ohnehin standhalten muss. Dies ermöglicht eine erhöhte Messgenauigkeit über die gesamte Lebensdauer der Strömungsmaschine. Da zudem nicht gegen einen Sensor mit Rückstand gemessen werden muss, wird die Messgenauigkeit signifikant erhöht, da die Größe des Kapazitätsmesswerts umgekehrt proportional zur Größe des Rotorspaltes ist. Aufgrund dieses kleinstmöglichen Abstands zwischen Elektrode und Gegenelektrode haben kleine Änderungen des Rotorspalts große Änderungen des Kapazitätsmesswerts zur Folge. Da der Rotorspalt zudem direkt ermittelt wird, müssen keine Korrekturparameter eines Rückstands der Gegenelektrode gegenüber der Oberfläche des Rotorgehäuses berücksichtigt werden. Die kapazitive Messung des Rotorspalts wird darüber hinaus dadurch weiter verbessert, dass es im Fall eines Einlaufens der Rotorschaufeln zu einem detektierbaren Kurzschluss kommt, so dass eine Berührung zwischen Rotorschaufeln und Rotorgehäuse direkt erfasst werden kann. Zudem wird im Fall eines Einlaufens der Rotorschaufeln weiterhin der korrekte Rotorspalt ermittelt, da sich nicht wie bei Einzelsensoren der Rückstand der Gegenelektrode ändert. Eine Kalibrierung der Kapazitätsmesswerte kann dabei exemplarisch an einer Strömungsmaschine erfolgen und danach für alle weiteren Strömungsmaschinen übernommen werden. Ein weiterer Vorteil besteht darin, dass axiale Bewegungen des Rotors gegenüber dem Rotorgehäuse keine Rolle spielen, da sich die Rotorschaufeln mit ihrer gesamten Ausdehnung innerhalb des Rotorgehäuses befinden. Ein besonders großer Messeffekt und eine entsprechend hohe Messgenauigkeit werden weiterhin dadurch sichergestellt, dass die Gesamtfläche der Spitzen aller Rotorschaufeln gleichzeitig in die Messung einbezogen wird. Da sich somit im Gegensatz zum Stand der Technik nicht nur der Oberflächenbereich einer Rotorschaufel unter einem kleinen Einzelsensor befindet, wird die Empfindlichkeit der Kapazitätsmessung um ein Vielfaches gesteigert.

Erfindungsgemäß ist weiter vorgesehen, dass das Rotorgehäuse auf seiner dem Rotor bzw. den Rotorschaufeln zugewandten Wand zumindest abschnittsweise zumindest einen Einlaufbelag bzw. Liner umfasst, welcher aus einem elektrisch leitfähigen Material gefertigt und als Gegenelektrode geschaltet ist. Da durch einen etwaigen Reibkontakt zwischen Rotorschaufeln und Rotorgehäuse Material abgetragen wird, stellt die Anordnung eines derartigen Einlaufbelags bzw. Liners im möglichen Kontaktbereich zwischen Rotorschaufeln und Rotorgehäuse eine vorteilhafte Möglichkeit dar, durch "Eingraben" der Rotorschaufeln in den Einlaufbelag ein für die jeweilige Strömungsmaschine individuelles Laufbett und damit einen möglichst kleinen Rotorspalt sicherzustellen. Zudem kann der Einlaufbelag bzw. der Liner mehrschichtig ausgebildet und somit optimal an die jeweiligen Betriebsbedingungen angepasst werden.

In einer vorteilhaften Ausgestaltung der Erfindung ist vorgesehen, dass zwischen dem Einlaufbelag bzw. dem Liner und dem Rotorgehäuse eine Abschirmung angeordnet ist, welche mittels einer Isolierung galvanisch gegenüber dem Einlaufbelag bzw. dem Liner und dem Rotorgehäuse isoliert ist. Auf diese Weise können während des Betriebs der Strömungsmaschine auftretende Schwingungen zwischen dem Einlaufbelag bzw. Liner und dem Rotorgehäuse zumindest signifikant verringert oder ganz verhindert werden.

In weiterer Ausgestaltung hat es sich als vorteilhaft gezeigt, dass das Spaltmesssystem zusätzlich mit der Abschirmung gekoppelt ist und ausgelegt ist, Kapazitätsmesswerte zwischen der Abschirmung und dem Rotorgehäuse zu ermitteln. Durch eine Ermittlung von Kapazitätsmesswerten zwischen der Abschirmung und dem Rotorgehäuse kann zusätzlich eine Verformung des Einlaufbelags bzw. des Liners und/oder des Rotorgehäuses detektiert und gegebenenfalls entsprechende Korrekturen abgeleitet werden.

Weitere Vorteile ergeben sich daraus, dass die Kopplung zwischen dem Spaltmesssystem und der Abschirmung und/oder dem Rotorgehäuse und/oder dem Rotor bzw. den Rotorschaufeln und/oder dem Einlaufbelag bzw. dem Liner mittels eines Koaxialkabels, insbesondere eines Triaxialkabels, ausgebildet ist. Dies gewährleistet gleichzeitig eine abschirmende Wirkung gegenüber störenden elektrischen Feldern sowie die Zuführung von Betriebsstrom. Dadurch kann sowohl eine hohe Betriebssicherheit als auch eine entsprechende Senkung des Bauraumbedarfs und des Gewichts des Spaltmesssystems gewährleistet werden. Zudem kann auf diese Weise auch das Spaltmesssystem koaxial bzw. triaxial ausgeführt sein, wodurch Signalstörungen, die durch Schwingungen des Koaxialkabels oder des Einlaufbelags bzw. Liners relativ zum Rotorgehäuse verursacht werden, zumindest weitgehend unterbunden werden. Entsprechende elektronische Verfahren sind bekannt und in der Literatur beschrieben.

Dabei ist in weiterer vorteilhafter Ausgestaltung vorgesehen, dass der Rotor bzw. die Rotorschaufeln und das Rotorgehäuse und/oder der Einlaufbelag bzw. der Liner und die Abschirmung auf demselben Potenzial liegen. Dies ermöglicht eine vorteilhafte Reduzierung der erforderlichen elektrischen Kontaktierungen sowie eine vereinfachte Ausgestaltung der Auswertungselektronik des Spaltmesssystems.

In einer weiteren vorteilhaften Ausgestaltung der Erfindung ist vorgesehen, dass der Einlaufbelag bzw. der Liner mit einem zentralen Leiter, die Abschirmung mit einem Mittelschirm und der Rotor bzw. die Rotorschaufeln sowie das Rotorgehäuse mit einen Außenschirm des Koaxialkabels gekoppelt sind. Dies stellt eine konstruktiv besonders einfache und bauraumsparende Möglichkeit dar, sowohl die Kapazitätsmesswerte zwischen dem Rotor und dem Einlaufbelag als auch die Kapazitätsmesswerte zwischen der Abschirmung und dem Rotorgehäuse zu ermitteln und damit sowohl den Rotorspalt als auch eine mögliche Verformung des Einlaufbelags oder des Rotorgehäuses zu detektieren. Hierbei ist es ebenfalls als vorteilhaft anzusehen das Spaltmesssystem triaxial auszuführen, um Signalstörungen, die durch Schwingungen des Koaxialkabels oder des Einlaufbelags bzw. Liners relativ zum Rotorgehäuse verursacht werden, zumindest weitgehend zu unterbinden.

Dabei hat es sich weiterhin als vorteilhaft gezeigt, dass sich der Einlaufbelag bzw. der Liner vollumfänglich entlang der dem Rotor bzw. den Rotorschaufeln zugewandten Wand des Rotorgehäuses erstreckt. Auf diese Weise werden die bereits genannten Vorteile des Einlaufbelags bzw. Liners über den gesamten Innenumfang des Rotorgehäuses sichergestellt.

In einer weiteren vorteilhaften Ausgestaltung der Erfindung ist vorgesehen, dass mehrere Einlaufbeläge bzw. Liner segmentartig entlang der dem Rotor bzw. den Rotorschaufeln zugewandten Wand des Rotorgehäuses angeordnet sind. Dies eröffnet die Möglichkeit, die einzelnen Segmente des Einlaufbelags mit einem Rotorspalt-Steuermodul, welches beispielsweise aus der WO 02/081869 A1 als bekannt zu entnehmen ist, zu koppeln und unter Berücksichtigung des ermittelten Rotorspalts ein aktives Regelsystem auszubilden, mittels welchem der Innendurchmesser des Rotorgehäuses gezielt eingestellt und nachgeregelt werden kann.

In weiterer Ausgestaltung der Erfindung ist vorgesehen, dass die mehreren Einlaufbeläge bzw. Liner galvanisch gegeneinander isoliert sind. Dadurch können mehrere Kapazitätsmesswerte ortsaufgelöst über den Umfang des Rotors ermittelt werden, wodurch mehrere Rotorspaltwerte bestimmt und sowohl eine statische Ermittlung der radialen Rotorlage relativ zum Rotorgehäuse als auch eine dynamische Ermittlung des Rotor-Orbitings ermöglicht ist. Die Bandbreite des Spaltmesssystems kann dabei niedrig gehalten werden, da keine Einzelrotorschaufeln aufgelöst werden müssen. Für die Ermittlung des Rotor-Orbitings sind daher wenige Ordnungen der Drehfrequenz ausreichend. Daher kann entsprechend stark gefiltert und ein entsprechend gutes Signal-Rausch-Verhältnis erreicht werden. Das Signal-Rausch-Verhältnis kann weiter verbessert werden, indem die Obergrenze des Signal-Rausch-Filters mit der Drehfrequenz des Rotors verändert wird.

Beim Spaltmesssystem ist erfindungsgemäß vorgesehen, dass zumindest ein Teil des Rotorgehäuses als Gegenelektrode schaltbar ist. Auf diese Weise ist ein störungsfreies Durchströmen der zugeordneten Strömungsmaschine mit dem jeweiligen Medium sichergestellt, da im Gegensatz zum Stand der Technik keine Beeinträchtigung der dem Rotor bzw. den Rotorschaufeln zugewandten Wand des Rotorgehäuses durch Vertiefungen und dergleichen gegeben ist. Zudem muss gegen einen Sensor mit Rückstand gemessen werden, so dass die Messgenauigkeit des Kapazitätsmesswerts, welcher umgekehrt proportional zur Größe des Rotorspaltes ist, signifikant erhöht wird. Darüber hinaus ermöglicht das Spaltmesssystem eine direkte Ermittlung eines Einlaufens einer Rotorschaufel, da dieses zu einem Kurzschlusssignal führt. Weitere sich ergebende Vorteile sind den vorgehenden Beschreibungen der Strömungsmaschine zu entnehmen.

Dabei hat es sich als vorteilhaft gezeigt, dass das Spaltmesssystem einen Referenzoszillator mit konstanter Frequenz und/oder einen Oszillator mit einer mit den Kapazitätsmesswerten korrespondierenden Frequenz und/oder einen Signalmischer und/oder einen F/U-Wandler und/oder einen Signal-Rausch-Filter umfasst. Dies ermöglicht eine besonders flexible Ausgestaltung des Spaltmesssystems in Abhängigkeit der jeweiligen konstruktiven Anforderungen und Gegebenheiten.

Weitere Vorteile ergeben sich dadurch, dass das Spaltmesssystem ausgelegt ist, mit mehreren Frequenzen, vorzugsweise 10 kHz und 100 kHz und 1 MHz, gleichzeitig zu arbeiten. Hierdurch können zusätzliche Informationen wie beispielsweise Isolationswiderstände ermittelt und die Messgenauigkeit des Spaltmesssystems weiter gesteigert werden.

Das Signal-Rausch-Verhältnis der Kapazitätsmesswerte und damit die Messgenauigkeit des Spaltmesssystems können vorteilhaft dadurch gesteigert werden, dass das Spaltmesssystem ausgelegt ist, die Kapazitätsmesswerte in Abhängigkeit einer Drehfrequenz des Rotors zu filtern.

Ein weiterer Aspekt der Erfindung betrifft ein Verfahren zum Ermitteln eines Rotorspaltes zwischen einem Rotorschaufeln umfassenden Rotor und einem den Rotor bzw. die Rotorschaufeln zumindest abschnittsweise umgebenden Rotorgehäuse einer Strömungsmaschine, wobei erfindungsgemäß vorgesehen ist, dass zumindest ein Teil des Rotorgehäuses als Gegenelektrode geschaltet wird. Dies ermöglicht eine verringerte Störung der Strömung durch das Rotorgehäuse der Strömungsmaschine bei gleichzeitig hoher Messgenauigkeit. Weitere sich ergebende Vorteile sind bereits aus den vorhergehenden Beschreibungen zu entnehmen.

Erfindungsgemäβ ist weiter vorgesehen, dass zumindest ein aus einem elektrisch leitfähigen Material gefertigter Einlaufbelag bzw. Liner als Gegenelektrode geschaltet wird, welcher zumindest abschnittsweise auf der dem Rotor bzw. den Rotorschaufeln zugewandten Wand des Rotorgehäuses angeordnet und galvanisch gegenüber dem Rotorgehäuse isoliert wird. Ein derartiger Einlaufbelag bzw. Liner erlaubt eine vorteilhafte Senkung des Verschleißes der Rotorschaufelspitzen. Aufgrund der Anpassbarkeit des verwendeten Materials kann zudem die Messgenauigkeit und Lebensdauer des Spaltmesssystems weiter gesteigert werden.

Dabei hat es sich als vorteilhaft gezeigt, dass anhand der Kapazitätsmesswerte mehrerer Einlaufbeläge bzw. Liner, welche zuvor segmentartig und galvanisch gegeneinander isoliert entlang der dem Rotor bzw. den Rotorschaufeln zugewandten Wand des Rotorgehäuses angeordnet werden, die statische und/oder dynamische Winkelstellung des Rotors gegenüber dem Rotorgehäuse ermittelt wird. Dies ermöglicht anhand der ortsaufgelösten Kapazitätsmesswerte eine Bestimmung der statischen Rotorlage relativ zum Rotorgehäuse und/oder des dynamischen Rotor-Orbitings.

Weitere Vorteile ergeben sich, indem anhand der Kapazitätsmesswerte der mehreren Einlaufbeläge bzw. Liner, welche zuvor segmentartig und galvanisch gegeneinander isoliert entlang der dem Rotor bzw. den Rotorschaufeln zugewandten Wand des Rotorgehäuses angeordnet werden, der Rotorspalt über einen Innenumfang des Rotorgehäuses ermittelt wird. Dies ermöglicht insbesondere in Verbindung mit einem aktiven Spalthaltungssystem eine geregelte Einstellbarkeit des Innendurchmessers des Rotorgehäuses.

Eine weitere Verbesserung der Messgenauigkeit wird dadurch erzielt, dass eine Obergrenze eines Signal-Rausch-Filters des Spaltmesssystems in Abhängigkeit einer Drehzahl des Rotors bzw. der Rotorschaufeln eingestellt wird.

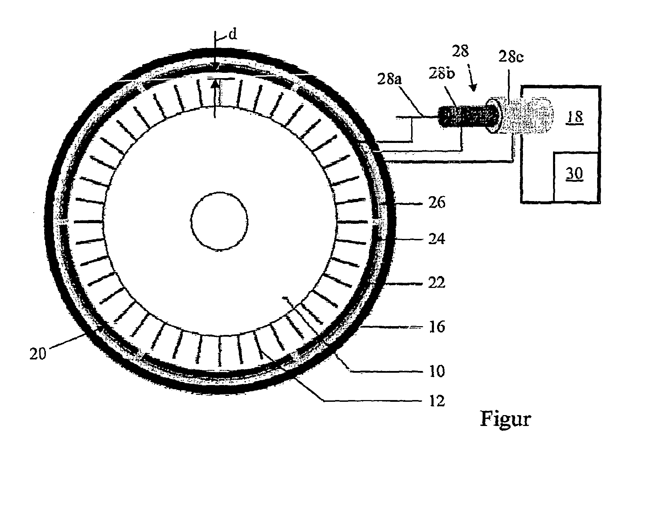

Weitere Vorteile, Merkmale und Einzelheiten der Erfindung ergeben sich anhand der nachfolgenden Beschreibung eines Ausführungsbeispiels sowie anhand der Zeichnung. Dabei zeigt die einzige Figur eine schematische und frontale Schnittansicht einer als Turbine ausgebildeten Strömungsmaschine gemäß einem Ausführungsbeispiel.

Die Figur, in welcher gleiche oder funktionsgleiche Elemente mit identischen Bezugszeichen versehen sind, zeigt eine schematische und frontale Schnittansicht einer im vorliegenden Ausführungsbeispiel als Turbine ausgebildeten Strömungsmaschine. Die Strömungsmaschine umfasst dabei einen Rotor 10 mit einer Vielzahl an Rotorschaufeln 12, welche unter Ausbildung eines Rotorspalts d von einem Rotorgehäuse 16 umgeben sind. Zum Ermitteln von den Rotorspalt d charakterisierenden Kapazitätsmesswerten umfasst die Strömungsmaschine weiterhin ein Spaltmesssystem 18, welches mit einer kapazitiven Sensoreinrichtung 20 gekoppelt ist. Dabei sind der Rotor 10 bzw. die Rotorschaufeln 12 als Elektrode und ein Teil des Rotorgehäuses 16 als Gegenelektrode der Sensoreinrichtung 20 geschaltet und bilden somit einen Kondensator, dessen Kapazitätsmesswerte C gemäß der allgemeinen Kondensatorformel C=ε₀*εᵣ*A/d mit der Größe des Rotorspalts d korrespondieren. Das Rotorgehäuse 16 umfasst auf seiner dem Rotor 10 bzw. den Rotorschaufeln 12 zugewandten Wand mehrere Einlaufbeläge bzw. Liner 22, welche aus einem elektrisch leitfähigen Material gefertigt sind und den als Gegenelektrode dienenden Teil des Rotorgehäuses 16 darstellen. Die Einlaufbeläge bzw. Liner 22 sind dabei segmentartig über den Innenumfang des Rotorgehäuses 16 verteilt und mittels einer Isolierung 26 galvanisch gegeneinander isoliert. Zur Verringerung von während des Betriebs der Strömungsmaschine auftretenden Schwingungen sind zwischen den Einlaufbelägen bzw. Linern 22 und dem Rotorgehäuse 16 Abschirmungen 24 angeordnet ist, welche ihrerseits mittels der Isolierung 26 galvanisch sowohl gegenüber den Einlaufbelägen bzw. Linern 22 als auch dem Rotorgehäuse 16 isoliert sind. Dabei ist jedoch zu betonen, dass die gezeigten Einlaufbeläge bzw. Liner 22 nicht zwingend vorhanden sein müssen und auch direkt gegen das Rotorgehäuse 16 gemessen werden kann.

Das Spaltmesssystem 18 ist über ein Triaxialkabel 28 mit der Abschirmung 24, dem Rotorgehäuse 16, dem Rotor 10 bzw. den Rotorschaufeln 12 und den Einlaufbelägen bzw. Linern 22 gekoppelt. Dabei liegen die Einlaufbeläge bzw. Liner 22 auf einem zentralen Leiter 28a, die Abschirmung 24 auf einem Mittelschirm 28b und der Rotor 10 bzw. die Rotorschaufeln 12 sowie das Rotorgehäuse 16 mit einen Außenschirm 28c des Triaxialkabels 28, wodurch der Rotor 10 bzw. die Rotorschaufeln 12 und das Rotorgehäuse 16 sowie die Einlaufbeläge bzw. Liner 22 und die Abschirmung 24 jeweils auf demselben Potenzial liegen. Der Rotor 10 bzw. die Rotorschaufeln 12 und das Rotorgehäuse 16 liegen dabei vorzugsweise auf einem Massepotential. Auf diese Weise können sowohl die den Rotorspalt d charakterisierenden Kapazitätsmesswerte C zwischen dem Rotor 10 bzw. den Rotorschaufeln 12 und dem Rotorgehäuse 16 als auch mögliche Verformungen des Rotorgehäuses 16 bzw. der Einlaufbeläge bzw. Liner 22 charakterisierende Kapazitätsmesswerte C' ermittelt und gegebenenfalls entsprechende Korrekturen abgeleitet werden. Da praktisch die gesamte, den Rotorschaufeln 12 zugewandte Innenoberfläche A der Einlaufbeläge bzw. Liner 22 des Rotorgehäuses 16 als Gegenelektrode der Sensoreinrichtung 20 wirkt, können gemäß C=ε₀*εᵣ*A/d entsprechend genaue Kapazitätsmesswerte C mit einem guten Signal-Rausch-Verhältnis ermittelt werden. Das Signal-Rausch-Verhältnis wird zusätzlich dadurch gesteigert, dass eine Obergrenze eines Signal-Rausch-Filters 30 des Spaltmesssystems 18 mit der Drehfrequenz des Rotors 10 verändert wird. Durch die Verwendung der segmentartigen Einlaufbeläge bzw. Liner 22 kann durch Berücksichtigung der einzelnen Kapazitätsmesswerte C die relative Lage des Rotors 10 gegenüber dem Rotorgehäuse 16 bestimmt bzw. das Rotor-Orbiting ermittelt werden. Zudem kann die Bandbreite des Spaltmesssystems 18 niedrig gehalten werden, da keine einzelnen Rotorschaufeln 12 aufgelöst werden müssen. Zur Bestimmung des Rotor-Orbitings sind daher wenige Ordnungen der Drehfrequenz des Rotors 10 ausreichend. Dies ermöglicht es, mittels des Signal-Rausch-Filters 30 entsprechend stark zu filtern, wodurch das Signal-Rausch-Verhältnis weiter gesteigert wird. Das Spaltmesssystem 18 kann dabei vorteilhaft mit mehreren Trägerfrequenzen, beispielsweise 10 kHz, 100 kHz und 1 MHz, arbeiten, wodurch neben einer weiteren Erhöhung der Messgenauigkeit zusätzliche Informationen wie etwa Isolierungswiderstände und dergleichen zugänglich sind.

## Patentansprüche

1. Strömungsmaschine mit einem Rotorschaufeln (12) umfassenden Rotor (10), mit einem den Rotor (10) bzw. die Rotorschaufeln (12) unter Ausbildung eines Rotorspalts (d) zumindest abschnittsweise umgebenden Rotorgehäuse (16) und mit einem Spaltmesssystem (18), welches mit einer kapazitiven Sensoreinrichtung (20) mit einer Elektrode und einer Gegenelektrode zum Ermitteln von den Rotorspalt (d) charakterisierenden Kapazitätsmesswerten (C) gekoppelt ist, wobei der Rotor (10) bzw. die Rotorschaufeln (12) als Elektrode der Sensoreinrichtung (20) geschaltet ist bzw. sind, wobei zumindest ein Teil (22) des Rotorgehäuses (16) als Gegenelektrode geschaltet ist,
**dadurch gekennzeichnet,**
**dass** das Rotorgehäuse (16) auf seiner dem Rotor (10) bzw. den Rotorschaufeln (12) zugewandten Wand zumindest abschnittsweise zumindest einen Einlaufbelag bzw. Liner (22) umfasst, welcher aus einem elektrisch leitfähigen Material gefertigt und als Gegenelektrode geschaltet ist.

2. Strömungsmaschine nach Anspruch 1,
**dadurch gekennzeichnet,**
**dass** zwischen dem Einlaufbelag bzw. dem Liner (22) und dem Rotorgehäuse (16) eine Abschirmung (24) angeordnet ist, welche mittels einer Isolierung (26) galvanisch gegenüber dem Einlaufbelag bzw. dem Liner (22) und dem Rotorgehäuse (16) isoliert ist.

3. Strömungsmaschine nach Anspruch 2,
**dadurch gekennzeichnet,**
**dass** das Spaltmesssystem (18) zusätzlich mit der Abschirmung (24) gekoppelt ist und ausgelegt ist, Kapazitätsmesswerte (C') zwischen der Abschirmung (24) und dem Rotorgehäuse (16) zu ermitteln.

4. Strömungsmaschine nach Anspruch 3,
**dadurch gekennzeichnet,**
**dass** die Kopplung zwischen dem Spaltmesssystem (18) und der Abschirmung (24) und/oder dem Rotorgehäuse (16) und/oder dem Rotor (10) bzw. den Rotorschaufeln (12) und/oder dem Einlaufbelag bzw. dem Liner (22) mittels eines Koaxialkabels (28), insbesondere eines Triaxialkabels, ausgebildet ist.

5. Strömungsmaschine nach einem der Ansprüche 2 bis 4,
**dadurch gekennzeichnet,**
**dass** der Rotor (10) bzw. die Rotorschaufeln (12) und das Rotorgehäuse (16) und/oder der Einlaufbelag bzw. der Liner (22) und die Abschirmung (24) auf demselben Potenzial liegen.

6. Strömungsmaschine nach Anspruch 4 und 5,
**dadurch gekennzeichnet,**
**dass** der Einlaufbelag bzw. der Liner (22) mit einem zentralen Leiter (28a), die Abschirmung (24) mit einem Mittelschirm (28b) und der Rotor (10) bzw. die Rotorschaufeln (12) sowie das Rotorgehäuse (16) mit einen Außenschirm (28c) des Koaxialkabels (28) gekoppelt sind.

7. Strömungsmaschine nach einem der Ansprüche 2 bis 6,
**dadurch gekennzeichnet,**
**dass** sich der Einlaufbelag bzw. der Liner (22) vollumfänglich entlang der dem Rotor (10) bzw. den Rotorschaufeln (12) zugewandten Wand des Rotorgehäuses (16) erstreckt.

8. Strömungsmaschine nach einem der Ansprüche 2 bis 7,
**dadurch gekennzeichnet,**
**dass** mehrere Einlaufbeläge bzw. Liner (22) segmentartig entlang der dem Rotor (10) bzw. den Rotorschaufeln (12) zugewandten Wand des Rotorgehäuses (16) angeordnet sind.

9. Strömungsmaschine nach Anspruch 8,
**dadurch gekennzeichnet,**
**dass** die mehreren Einlaufbeläge bzw. Liner (22) galvanisch gegeneinander isoliert sind.

10. Strömungsmaschine nach mindestens einem der vorangehenden Ansprüche,
**dadurch gekennzeichnet,**
**dass** das Spalt messsystem (18) einen ferenzoszillator mit konstanter Frequenz und/oder einen Oszillator mit einer mit den Kapazitätsmesswerten (C) korrespondierenden Frequenz und/oder einen Signalmischer und/oder einen F/U-Wandler und/oder einen Signal-Rausch-Filter (30) umfasst.

11. Strömungsmaschine nach mindestens einem der vorangehenden Ansprüche,
**dadurch gekennzeichnet,**
**dass** das Spalt messsystem (18) ausgelegt ist, mit mehreren Frequenzen, vorzugsweise 10 kHz und 100 kHz und 1 MHz, gleichzeitig zu arbeiten.

12. Strömungsmaschine nach mindestens einem der vorangehenden Ansprüche,
**dadurch gekennzeichnet,**
**dass** das Spalt messsystem (18) ausgelegt ist, die Kapazitätsmesswerte (C) in Abhängigkeit einer Drehfrequenz des Rotors (10) zu filtern.

13. Verfahren zum Ermitteln eines Rotorspaltes (d) zwischen einem Rotorschaufeln (12) umfassenden Rotor (10) und einem den Rotor (10) bzw. die Rotorschaufeln (12) zumindest abschnittsweise umgebenden Rotorgehäuse (16) einer Strömungsmaschine, wobei mittels eines Spaltmesssystems (18), welches mit zumindest einer kapazitiven Sensoreinrichtung (20) gekoppelt ist, den Rotorspalt (d) charakterisierende Kapazitätsmesswerte (C) ermittelt werden, wobei der Rotor (10) bzw. die Rotorschaufeln (12) als Elektrode der Sensoreinrichtung (20) geschaltet werden, wobei zumindest ein Teil (22) des Rotorgehäuses (16) als Gegenelektrode geschaltet wird,
**dadurch gekennzeichnet,**
**dass** zumindest ein aus einem elektrisch leitfähigen Material gefertigter Einlaufbelag bzw. Liner (22) als Gegenelektrode geschaltet wird, welcher zumindest abschnittsweise auf der dem Rotor (10) bzw. den Rotorschaufeln (12) zugewandten Wand des Rotorgehäuses (16) angeordnet und galvanisch gegenüber dem Rotorgehäuse (16) isoliert wird.

14. Verfahren nach Anspruch 13,
**dadurch gekennzeichnet,**
**dass** anhand der Kapazitätsmesswerte (C) mehrerer Einlaufbeläge bzw. Liner (22), welche zuvor segmentartig und galvanisch gegeneinander isoliert entlang der dem Rotor (10) bzw. den Rotorschaufeln (12) zugewandten Wand des Rotorgehäuses (16) angeordnet werden, die statische und/oder dynamische Winkelstellung des Rotors (10) gegenüber dem Rotorgehäuse (16) ermittelt wird.

15. Verfahren nach Anspruch 13 oder 14,
**dadurch gekennzeichnet,**
**dass** anhand der Kapazitätsmesswerte (C) der mehreren Einlaufbeläge bzw. Liner (22), welche zuvor segmentartig und galvanisch gegeneinander isoliert entlang der dem Rotor (10) bzw. den Rotorschaufeln (12) zugewandten Wand des Rotorgehäuses (16) angeordnet werden, der Rotorspalt (d) über einen Innenumfang des Rotorgehäuses (16) ermittelt wird.

## Claims

1. A turbomachine having a rotor (10), comprising rotor blades (12), having a rotor housing (16) that at least in sections surrounds the rotor (10) or the rotor blades (12) respectively with formation of a rotor gap (d) and having a gap-measuring system (18) which is coupled to a capacitive sensor device (20) with an electrode and a counter-electrode to determine measured capacitance values (C) that characterise the rotor gap (d), wherein the rotor (10) or the rotor blades (12) is or are connected as the electrode of the sensor device (20), wherein at least a portion (22) of the rotor housing (16) is connected as the counter-electrode,
**characterised in that**
the rotor housing (16) comprises, on its wall facing the rotor (10) or the rotor blades (12), at least in sections at least one run-in coating or liner (22) which is produced from an electrically conductive material and is connected as the counter-electrode.

2. A turbomachine according to claim 1,
**characterised in that**
arranged between the run-in coating or the liner (22) and the rotor housing (16) there is a shielding (24) which by means of an insulation (26) is galvanically insulated with respect to the run-in coating or the liner (22) and the rotor housing (16).

3. A turbomachine according to claim 2,
**characterised in that**
the gap-measuring system (18) is additionally coupled to the shielding (24) and is designed to determine measured capacitance values (C') between the shielding (24) and the rotor housing (16).

4. A turbomachine according to claim 3,
**characterised in that**
the coupling between the gap-measuring system (18) and the shielding (24) and/or the rotor housing (16) and/or the rotor (10) or the rotor blades (12) and/or the run-in coating or the liner (22) is formed by means of a coaxial cable (28), in particular a triaxial cable.

5. A turbomachine according to one of claims 2 to 4,
**characterised in that**
the rotor (10) or the rotor blades (12) and the rotor housing (16) and/or the run-in coating or the liner (22) and the shielding (24) are at the same potential.

6. A turbomachine according to claim 4 and 5,
**characterised in that**
the run-in coating or the liner (22) is coupled to a central conductor (23a), the shielding (24) is coupled to a central shield (28b), and the rotor (10) or the rotor blades (12) and also the rotor housing (16) are coupled to an outer shield (28c) of the coaxial cable (28).

7. A turbomachine according to one of claims 2 to 6,
**characterised in that**
the run-in coating or the liner (22) extends along the full extent of the wall of the rotor housing (16) that faces the rotor (10) or the rotor blades (12).

8. A turbomachine according to one of claims 2 to 7,
**characterised in that**
a plurality of run-in coatings or liners (22) are arranged in the manner of segments along the wall of the rotor housing (16) that faces the rotor (10) or the rotor blades (12).

9. A turbomachine according to claim 8,
**characterised in that**
the plurality of run-in coatings or liners (22) are galvanically insulated with respect to each other.

10. A turbomachine according to at least one of the preceding claims,
**characterised in that**
the gap-measuring system (18) comprises a reference oscillator with constant frequency and/or an oscillator with a frequency corresponding to the measured capacitance values (C) and/or a signal-mixer and/or an f/V converter and/or a signal-to-noise filter (30).

11. A turbomachine according to at least one of the preceding claims,
**characterised in that**
the gap-measuring system (18) is designed to operate with a plurality of frequencies, preferably 10 kHz and 100 kHz and 1 MHz, simultaneously.

12. A turbomachine according to at least one of the preceding claims,
**characterised in that**
the gap-measuring system (18) is designed to filter the measured capacitance values (C) as a function of a rotational frequency of the rotor (10).

13. Method for determining a rotor gap (d) between a rotor (10) comprising rotor blades (12) and a rotor housing (16) of a turbomachine surrounding the rotor (10) or the rotor blades (12) respectively at least in sections, wherein measured capacitance values (C) that characterise the rotor gap (d) are determined by means of a gap-measuring system (18) which is coupled to at least one capacitive sensor device (20), wherein the rotor (10) or the rotor blades (12) are connected as the electrode of the sensor device (20), wherein at least one portion (22) of the rotor housing (16) is connected as the counter-electrode,
**characterised in that**
at least one run-in coating or liner (22) that is produced from an electrically conductive material, is arranged at least in sections on the wall of the rotor housing (16) that faces the rotor (10) or the rotor blades (12) and is galvanically insulated with respect to the rotor housing (16) is connected as the counter-electrode.

14. Method according to claim 13,
**characterised in that**
the measured capacitance values (C) of a plurality of run-in coatings or liners (22), which are arranged previously in the manner of segments and so as to be galvanically insulated with respect to each other along the wall of the rotor housing (16) facing the rotor (10) or the rotor blades (12), are used to determine the static and/or dynamic angular position of the rotor (10) with respect to the rotor housing (16).

15. Method according to claim 13 or 14,
**characterised in that**
the measured capacitance values (C) of the plurality of run-in coatings or liners (22), which are arranged previously in the manner of segments and so as to be galvanically insulated with respect to each other along the wall of the rotor housing (16) facing the rotor (10) or the rotor blades (12), are used to determine the rotor gap (d) over an inner circumference of the rotor housing (16).

## Revendications

1. Turbomachine, avec un rotor (10) comprenant des aubes (12) de rotor, avec un carter (16) de rotor entourant au moins partiellement le rotor (10) ou les aubes (12) de rotor en formant un interstice (d) de rotor, et avec un système de mesure (18) d'interstice couplé à un dispositif de détecteur (20) capacitif pourvu d'une électrode et d'une contre-électrode pour déterminer des valeurs de mesure (C) de capacité caractéristiques de l'interstice (d) de rotor, le rotor (10) ou les aubes (12) de rotor étant connectés en tant qu'électrode au dispositif de détecteur (20), au moins une partie (22) du carter (16) de rotor étant connectée en tant que contre-électrode,
**caractérisée en ce que**
le carter (16) de rotor présente au moins partiellement sur sa paroi opposée au rotor (10) ou aux aubes (12) de rotor au moins une garniture d'entrée ou un revêtement (22) fabriqués en matériau électriquement conducteur et connectés en tant que contre-électrode.

2. Turbomachine selon la revendication 1,
**caractérisée en ce que**
un blindage (24) est disposé entre la garniture d'entrée ou le revêtement (22) et le carter (16) de rotor, lequel est galvaniquement isolé par rapport à la garniture d'entrée ou au revêtement (22) et au carter (16) de rotor au moyen d'une isolation (26).

3. Turbomachine selon la revendication 2,
**caractérisée en ce que**
le système de mesure (18) d'interstice est en outre couplé au blindage (24) et est prévu pour déterminer des valeurs de mesure (C') de capacité entre le blindage (24) et le carter (16) de rotor.

4. Turbomachine selon la revendication 3,
**caractérisée en ce que**
le couplage entre le système de mesure (18) d'interstice et le blindage (24) et/ou le carter (16) de rotor et/ou le rotor (10) voire les aubes (12) de rotor et/ou la garniture d'entrée voire le revêtement (22) est réalisé au moyen d'un câble coaxial (28), en particulier d'un câble triaxial.

5. Turbomachine selon l'une des revendications 2 à 4,
**caractérisée en ce que**
le rotor (10) voire les aubes (12) de rotor et le carter (16) de rotor et/ou la garniture d'entrée voire le revêtement (22) et le blindage (24) sont alignées sur le même potentiel.

6. Turbomachine selon les revendications 4 et 5,
**caractérisée en ce que**
la garniture d'entrée voire le revêtement (22) sont couplés à un conducteur central (28a), le blindage (24) à un blindage central (28b) et le rotor (10) ou les aubes (12) de rotor ainsi que le carter (16) de rotor à un blindage extérieur (28c) du câble coaxial (28).

7. Turbomachine selon l'une des revendications 2 à 6,
**caractérisée en ce que**
la garniture d'entrée ou le revêtement (22) s'étendent sur toute la périphérie de la paroi du carter (16) de rotor opposée au rotor (10) ou aux aubes (12) de rotor.

8. Turbomachine selon l'une des revendications 2 à 7,
**caractérisée en ce que**
plusieurs garnitures d'entrée ou revêtements (22) sont disposés sous forme de segments sur la paroi du carter (16) de rotor opposée au rotor (10) ou aux aubes (12) de rotor.

9. Turbomachine selon la revendication 8,
**caractérisée en ce que**
les plusieurs garnitures d'entrée ou revêtements (22) sont galvaniquement isolés les uns par rapport aux autres.

10. Turbomachine selon au moins une des revendications précédentes,
**caractérisée en ce que**
le système de mesure (18) d'interstice comprend un oscillateur de référence à fréquence constante et/ou un oscillateur ayant une fréquence correspondant aux valeurs de mesure (C) de capacité et/ou un mélangeur de signaux et/ou un convertisseur F/U et/ou un filtre (30) de bruit de signal.

11. Turbomachine selon au moins une des revendications précédentes,
**caractérisée en ce que**
le système de mesure (18) d'interstice est prévu pour fonctionner simultanément sous plusieurs fréquences, préférentiellement 10 kHz et 100 kHz et 1 MHz.

12. Turbomachine selon au moins une des revendications précédentes,
**caractérisée en ce que**
le système de mesure (18) d'interstice est prévu pour filtrer les valeurs de mesure (C) de capacité en fonction d'une fréquence de rotation du rotor (10).

13. Procédé de détermination d'un interstice de rotor (d) entre un rotor (10) comprenant des aubes (12) de rotor, et un carter (16) de rotor d'une turbomachine, lequel entoure au moins partiellement le rotor (10) ou les aubes (12) de rotor, des valeurs de mesure (C) de capacité caractéristiques de l'interstice (d) de rotor étant déterminées au moyen d'un système de mesure (18) d'interstice couplé à au moins un dispositif de détecteur (20) capacitif, le rotor (10) ou les aubes (12) de rotor étant connectés en tant qu'électrode au dispositif de détecteur (20), au moins une partie (22) du carter (16) de rotor étant connectée en tant que contre-éleatrode, ,
**caractérisé en ce que**
au moins une garniture d'entrée ou un revêtement (22) fabriqués en matériau électriquement conducteur sont connectés en tant que contre-électrode, sont disposés au moins partiellement sur la paroi du carter (16) de rotor opposée au rotor (10) ou aux aubes (12) de rotor, et sont galvaniquement isolés par rapport au carter (16) de rotor.

14. Procédé selon la revendication 13,
**caractérisé en ce que**
la position angulaire statique et/ou dynamique du rotor (10) par rapport au carter (16) de rotor est déterminée à partir des valeurs de mesure (C) de capacité de plusieurs garnitures d'entrée ou revêtements (22) préalablement disposés sous forme de segments galvaniquement isolés les uns par rapport aux autres sur la paroi du carter (16) de rotor opposée au rotor (10) ou aux aubes (12) de rotor.

15. Procédé selon la revendication 13 ou 14,
**caractérisé en ce que**
l'interstice (d) de rotor est déterminé sur une périphérie intérieure du carter (16) de rotor à partir des valeurs de mesure (C) de capacité de plusieurs garnitures d'entrée ou revêtements (22) préalablement disposés sous forme de segments galvaniquement isolés les uns par rapport aux autres sur la paroi du carter (16) de rotor opposée au rotor (10) ou aux aubes (12) de rotor.
